# EUROPÄISCHE PATENTANMELDUNG

(11) **EP 4 837 808 A1**
(43) Veröffentlichungstag der Anmeldung: **11.11.2026**
(21) Anmeldenummer: 25174216.9
(22) Anmeldetag: 05.05.2025
(51) Int. Cl.: B60W 50/00, B60W 30/184, B60W 30/188, B60W 30/20

(54) **VERFAHREN ZUM STEUERN EINER DREHMOMENTVERTEILUNG**

(71) Anmelder: MAGNA Automotive Europe GmbH, 1120 Wien (AT)
(72) Erfinder: GROSSBICHLER, Martin, 4421 Aschbach/Steyr (AT); KOLLMANN, Michael, 8583 Hirschegg - Pack (AT); SCHRANGL, Patrick, 4040 Linz (AT)
(74) Vertreter: Zangger, Bernd

(57) **Zusammenfassung**

Ein Verfahren zum Steuern einer Drehmomentverteilung (T) und/oder einer Ein- und Auskoppelung (D) einer Antriebsverbindung in einem Kraftfahrzeug (1), wobei das Verfahren ein Planungs- oder Vorhersagemodul (2) verwendet, um aus einer vorgegebenen Kontextinformation (C) zukünftige Fahrzustände (F), bevorzugt zukünftige Geschwindigkeiten (v) und/oder Beschleunigungen (a) und/oder Drehmomente (t) des Kraftfahrzeuges, zu bestimmen, wobei das Verfahren ein Drehmomentverteilungs-Strategiemodul und/oder ein Ein- und Auskoppelungs-Strategiemodul als Strategiemodul (3) verwendet, um abhängig von dem Ergebnis eines Optimierungsalgorithmus (12) des Strategiemoduls (3), der die geplanten oder vorhergesagten zukünftigen Fahrzustände (F) aus dem Planungs- oder Vorhersagemodul (2) als Eingabeparameter verwendet um eine optimale Drehmomentverteilung (T) und/oder eine optimale Ein- und Auskoppelung (D) der Antriebsverbindung in dem Kraftfahrzeug (1) über einen zeitlichen Prädiktionshorizont zu bestimmen, die Drehmomentverteilung (T) und/oder die Ein- und Auskoppelung (D) der Antriebsverbindung in dem Kraftfahrzeug (1) zu steuern.

## Beschreibung

### Gebiet der Erfindung

Die vorliegende Erfindung betrifft ein Verfahren zum Steuern einer Drehmomentverteilung und/oder einer Ein- und Auskoppelung einer Antriebsverbindung in einem Kraftfahrzeug.

### Stand der Technik

Es ist bekannt, dass Kraftfahrzeuge eine Steuerung aufweisen können, die eine gewünschte Drehmomentverteilung eines Antriebsstranges, beispielsweise auf bestimmte Räder oder auf bestimmte Achsen des Kraftfahrzeuges, bestimmen und - direkt oder indirekt über eine weitere Steuereinheit - umsetzen kann. Zusätzlich oder alternativ kann in einer Steuerung auch festgelegt werden, dass bestimmte Räder oder Achsen von einem Antrieb, beispielsweise einem Elektro- oder Verbrennungsmotor, an- oder abgekuppelt werden können. Insgesamt kann dadurch ein gewünschtes Antriebsdrehmoment auf bestimmte Räder oder Achsen übertragen werden.

Die derzeit üblichen Strategien zur Steuerung eines Antriebsstrangs, wie zum Beispiel die Steuerung der Kupplung und der Drehmomentverteilung, verwenden Steuerungsansätze, die sich auf aktuelle und vergangene Zustände und Eingaben bzw. Bedienungsvorgänge durch den Fahrer stützen.

Auf der Grundlage dieser Eingaben werden eine Kupplungsentscheidung und eine Drehmomentverteilung festgelegt, um die Anforderungen des Fahrers oder eines ADAS-Systems - in einem automatisierten Fahrzeug - zu erfüllen, wobei auch die Sicherheit und der Schutz der Komponenten berücksichtigt werden kann.

### Zusammenfassung der Erfindung

Es ist eine Aufgabe der Erfindung, ein Verfahren zum Steuern einer Drehmomentverteilung und/oder einer Ein- und Auskoppelung einer Antriebsverbindung in einem Kraftfahrzeug anzugeben, dass ein verbessertes Verhalten der Drehmomentverteilung und/oder der Ein- und Auskoppelung einer Antriebsverbindung ermöglicht, insbesondere im Hinblick auf insgesamt geringeren Energieverbrauch und/oder geringere Geräuschentwicklung und/oder reduzierte Vibrationen im Kraftfahrzeug und/oder geringeren Komponentenverschleiß, beispielsweise der verwendeten Kupplungen.

Die Lösung der Aufgabe erfolgt durch ein Verfahren zum Steuern einer Drehmomentverteilung und/oder einer Ein- und Auskoppelung einer Antriebsverbindung in einem Kraftfahrzeug, wobei das Verfahren ein Planungs- oder Vorhersagemodul verwendet, um aus einer vorgegebenen Kontextinformation zukünftige Fahrzustände, bevorzugt zukünftige Geschwindigkeiten und/oder Beschleunigungen und/oder Drehmomente des Kraftfahrzeuges, zu bestimmen, wobei das Verfahren ein Drehmomentverteilungs-Strategiemodul und/oder ein Ein- und Auskoppelungs-Strategiemodul als Strategiemodul verwendet, um abhängig von dem Ergebnis eines Optimierungsalgorithmus des Strategiemoduls, der die geplanten oder vorhergesagten zukünftigen Fahrzustände aus dem Planungs- oder Vorhersagemodul als Eingabeparameter verwendet um eine optimale Drehmomentverteilung und/oder eine optimale Ein- und Auskoppelung der Antriebsverbindung in dem Kraftfahrzeug über einen zeitlichen Prädiktionshorizont zu bestimmen, die Drehmomentverteilung und/oder die Ein- und Auskoppelung der Antriebsverbindung in dem Kraftfahrzeug zu steuern.

Erfindungsgemäß verwendet ein Steuerverfahren in einem Kraftfahrzeug, das entweder eine Drehmomentaufteilung oder eine An- und Abkoppelung von Rädern oder Achsen von einem Antrieb des Kraftfahrzeugs vornehmen kann, oder beides, ein Strategiemodul, welches einen Optimierungsalgorithmus zur Bestimmung der optimalen Drehmomentverteilung und/oder der Ein- und Auskoppelung der Antriebsverbindung über einen zeitlichen Prädiktionshorizont verwendet. Das Strategiemodul ist ein Drehmomentverteilungs-Strategiemodul und/oder ein Ein- und Auskoppelungs-Strategiemodul. Das Strategiemodul verwendet als Eingangsparameter für das Optimierungsverfahren die von einem Planungs- oder Vorhersagemodul für die Zukunft bestimmten, wahrscheinlichen oder für ein automatisiertes Fahren geplanten Ausgangsgrößen, nämlich zukünftige Fahrzustände des Kraftfahrzeugs, insbesondere zukünftige Geschwindigkeiten und/oder Beschleunigungen und/oder Drehmomente des Kraftfahrzeuges. Das Kraftfahrzeug, insbesondere der Antriebsstrang und/oder eine Trenneinheit des Antriebsstrangs des Kraftfahrzeugs, wird dann entsprechend der bestimmten, optimierten Drehmomentverteilung und/oder Ein- und Auskoppelung der Antriebsverbindung in dem Kraftfahrzeug vom Strategiemodul unmittelbar oder mittelbar, beispielsweise über ein Fahrzeugsteuerungsmodul, wie ein ADAS-Modul, gesteuert.

Ein Planungsmodul wird in einem automatisiert fahrenden Kraftfahrzeug zur Planung des durch eine Steuereinheit umgesetzten Verhaltens des Kraftfahrzeuges eingesetzt. Ein Vorhersagemodul wird zu einer Vorhersage des voraussichtlichen, wahrscheinlichen Fahrverhaltens eines menschlichen Fahrers eines Kraftfahrzeuges eingesetzt.

Die Voraussage bzw. Planung der Zukunft wird im Planungs- oder Vorhersagemodul auf Basis einer vorgegebenen Kontextinformation vorgenommen und deren Ergebnis wird erfindungsgemäß von dem Optimierungsalgorithmus des Strategiemoduls, zur Bestimmung der optimalen Drehmomentverteilung und/oder der Ein- und Auskoppelung der Antriebsverbindung, genutzt. Die Optimierung betrifft dabei einen vorgegebenen, vorausliegenden Zeithorizont, nämlich den zeitlichen Prädiktionshorizont, über welchen bestimmte Parameter optimiert werden sollen.

Die "Ein- und Auskoppelung der Antriebsverbindung" bezieht sich auf das Ein- und Auskoppeln einer Verbindung zwischen zumindest einem Antriebsmotor einerseits und mindestens einem Rad oder mindestens einer Achse andererseits. Ebenso bezieht sich der Begriff "Drehmomentverteilung" auf die Verteilung eines Drehmoments von zumindest einem Antriebsmotor auf zumindest zwei Räder oder zumindest zwei Achsen.

Durch ein erfindungsgemäßes Verfahren können zumindest einige der folgenden Vorteile erreicht werden:
- Die Strategie zur Steuerung des Antriebsstrangs nutzt zusätzliche Informationen, die von aktuellen ADAS-Sensoren und anderen Eingaben, wie zum Beispiel Kamera, Radar, elektronischer Horizont, Karte, Navigationssystem usw. zur Verfügung stehen.
- Die Antriebsstrang-Steuerungsstrategie nutzt Vorhersagen (im manuellen, gesteuerten oder autonomen Fahrmodus) und berücksichtigt somit nützliche Informationen über bevorstehende Fahrsituationen, die zur Verbesserung der zugrunde liegenden Steuerungsstrategie beitragen können.
- Die Antriebsstrangsteuerungsstrategie interagiert im automatisierten Fahrmodus mit dem ADAS-System und berücksichtigt somit nützliche Informationen über bevorstehende Fahrsituationen, die zur Verbesserung der zugrunde liegenden Steuerungsstrategie beitragen können.
- Aufgrund der Verwendung von vorausschauenden Informationen über bevorstehende Fahrsituationen ist eine systematische Optimierung in Bezug auf Sicherheit, Lärm, Lebensdauer und Energie möglich und führt zu verbesserten Ergebnissen.

Weiterbildungen der Erfindung sind in den abhängigen Ansprüchen, der Beschreibung sowie den beigefügten Zeichnungen angegeben.

Vorzugsweise berücksichtig der Optimierungsalgorithmus des Strategiemoduls zukünftige geplante oder vorhergesagte Drehmomente in der Optimierung, die aus den geplanten oder vorhergesagten zukünftigen Fahrzuständen, wie Geschwindigkeiten und/oder Beschleunigungen, aus dem Planungs- oder Vorhersagemodul stammen oder durch einen Fahrkraftprädiktor abgeleitet sind. Die zukünftigen Drehmomente können beispielsweise vom Optimierungsmodul selbst oder schon vom Planungs- oder Vorhersagemodul bestimmt werden.

Bevorzugt bestimmt das Strategiemodul mittels eines Traktionsfähigkeitsprädiktors ein maximales Drehmoment und/oder ein minimales Drehmoment als Sicherheitsgrenze für zukünftige Drehmomentanforderungen und der Optimierungsalgorithmus des Strategiemoduls hält diese Sicherheitsgrenze bzw. Sicherheitsgrenzen bei der Bestimmung der optimalen Drehmomentverteilung und/oder der optimalen Ein- und Auskoppelung der Antriebsverbindung in dem Kraftfahrzeug über den zeitlichen Prädiktionshorizont ein, somit für die zukünftig geplanten oder vorhergesagten Drehmomentanforderungen in der Optimierung. Die Drehmomentverteilung und/oder die Ein- und Auskoppelung der Antriebsverbindung in dem Kraftfahrzeug werden also so gesteuert, dass die auftretenden Drehmomente innerhalb der Sicherheitsgrenzen bleiben.

Vorzugsweise optimiert der Optimierungsalgorithmus des Strategiemoduls die Drehmomentverteilung und/oder die Ein- und Auskoppelung der Antriebsverbindung in dem Kraftfahrzeug auf folgende Ziele hin: Energieverbrauch und/oder Geräuschentwicklung und/oder Vibrationen und/oder Komponentenverschleiß. Bevorzugt werden zu diesem Zweck diese Größen im Prädiktor für den zeitlichen Prädiktionshorizont berechnet und dem Optimierungsalgorithmus übergeben.

Bevorzugt verwendet der Optimierungsalgorithmus des Strategiemoduls zur Optimierung der Dremomentverteilung und/oder der Ein- und Auskoppelung der Antriebsverbindung in dem Kraftfahrzeug Straftherme für hohe Drehmomente und/oder Straftherme für ungünstige Drehmomentverteilungen hinsichtlich Energieverbrauch und/oder Geräuschentwicklung und/oder Vibrationen und/oder Komponentenverschleiß.

Ein erfindungsgemäßes Verfahren kann vorsehen, dass das Planungs- oder Vorhersagemodul eine Vorhersage der wahrscheinlichsten Geschwindigkeit und/oder Beschleunigung, die ein Fahrer des Kraftfahrzeugs in der kurzfristigen und mittelfristigen Zukunft wählen wird, durch Schätzalgorithmen und/oder Schätzkonzepte bestimmt oder dass das Planungs- oder Vorhersagemodul eine Planung der Geschwindigkeit und/oder Beschleunigung, die ein Fahrzeugsteuerungsmodul, insbesondere ein ADAS Modul, des Kraftfahrzeugs in der kurzfristigen und mittelfristigen Zukunft umsetzen wird, durch eine numerische Optimierung bestimmt, bevorzugt unter Berücksichtigung einer aktuellen und zukünftiger Kontextinformation.

Bevorzugt verwendet das Planungs- oder Vorhersagemodul als Kontextinformation Informationen über die vorausliegende Straße - wie Kurven, Steigungen, Geschwindigkeitsbegrenzungen, Verkehrsschilder etc. - und/oder Informationen über die vorausliegende Route - insbesondere aus einem Navigationssystem - und/oder Informationen über aktuelle und/oder zukünftige Umweltbedingungen - wie Wetter, Temperatur, Feuchtigkeit, Straßenzustand -, um zukünftige Geschwindigkeiten und/oder Beschleunigungen des Kraftfahrzeuges zu bestimmen.

Vorzugsweise verwendet das Verfahren ein Fahrzeugsteuerungsmodul, um in Übereinstimmung mit den geplanten oder vorhergesagten zukünftigen Geschwindigkeiten und/oder Beschleunigungen aus dem Planungs- oder Vorhersagemodul das Kraftfahrzeug zu steuern, wobei bevorzugt Ausgangsdaten des Fahrzeugsteuerungsmoduls als Eingangsdaten für das Strategiemodul verwendet werden.

Ein erfindungsgemäßes Verfahren kann bevorzugt in einem Steuergerät eines Kraftfahrzeugs ausgeführt werden, wobei die Ausführung auf einem Steuergerät auch eine verteilte Architektur umfassen kann, beispielsweise so, dass einzelne Module eines solchen Verfahrens auf unterschiedlichen Steuergeräten ausgeführt werden.

### Kurzbeschreibung der Zeichnung

Die Erfindung wird im Folgenden beispielhaft unter Bezugnahme auf die Zeichnungen beschrieben.
- Fig.1: ist eine schematische Darstellung eines erfindungsgemäßen Verfahrens.
- Fig. 2: ist eine schematische Darstellung eines Strategiemoduls für ein erfindungsgemäßes Verfahren.

### Detaillierte Beschreibung der Erfindung

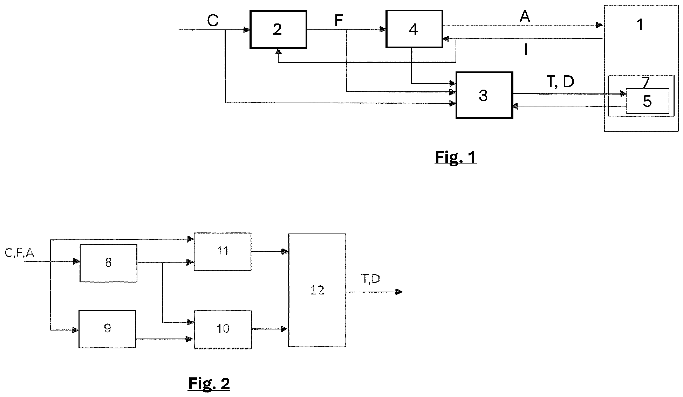

In der Fig.1 ist ein erfindungsgemäßes Verfahren zum Steuern einer Drehmomentverteilung T und/oder einer Ein- und Auskoppelung D einer Antriebsverbindung in einem Kraftfahrzeug 1 schematisch dargestellt.

Das Verfahren verwendet ein Planungs- oder Vorhersagemodul 2, um aus einer vorgegebenen Kontextinformation C zukünftige Fahrzustände F, bevorzugt zukünftige Geschwindigkeiten v und/oder Beschleunigungen a und/oder Drehmomente des Kraftfahrzeuges, zu bestimmen, wobei das Verfahren ein Drehmomentverteilungs-Strategiemodul und/oder ein Ein- und Auskoppelungs-Strategiemodul als Strategiemodul 3 verwendet, um abhängig von dem Ergebnis eines Optimierungsalgorithmus 12 des Strategiemoduls 3, der die geplanten oder vorhergesagten zukünftigen Fahrzustände F aus dem Planungs- oder Vorhersagemodul 2 als Eingabeparameter verwendet um eine optimale Drehmomentverteilung T und/oder eine optimale Ein- und Auskoppelung D der Antriebsverbindung in dem Kraftfahrzeug 1 über einen zeitlichen Prädiktionshorizont zu bestimmen, die Drehmomentverteilung T und/oder die Ein- und Auskoppelung D der Antriebsverbindung in dem Kraftfahrzeug 1 zu steuern.

Das Planungs- oder Vorhersagemodul 2 kann eine Vorhersage der wahrscheinlichsten Fahrzustände, wie Geschwindigkeit und/oder Beschleunigung und/oder Drehmoment, die ein Fahrer des Kraftfahrzeugs 1 in der kurzfristigen und mittelfristigen Zukunft wählen wird bestimmen, oder eine Planung der Fahrzustände, wie Geschwindigkeit und/oder Beschleunigung und/oder Drehmoment, die ein Fahrzeugsteuerungsmodul 4, insbesondere ein ADAS-Modul bzw. eine ADAS-Steuerung, des Kraftfahrzeugs 1 in der kurzfristigen und mittelfristigen Zukunft umsetzen wird, bestimmen.

Das Verfahren kann somit ein Fahrzeugsteuerungsmodul 4 verwenden, um in Übereinstimmung mit den geplanten oder vorhergesagten zukünftigen Fahrzuständen aus dem Planungs- oder Vorhersagemodul 2, das Kraftfahrzeug 1 zu steuern, wobei bevorzugt Ausgangsdaten des Fahrzeugsteuerungsmoduls 4 als zusätzliche Eingangsdaten für das Strategiemodul 3 verwendet werden, vorzugsweise zusätzlich zu Ausgabeparametern des Planungs- oder Vorhersagemoduls 2 und/oder zu Kontextinformationen C.

Die dargestellte Lösung schlägt insgesamt eine Kontrollstrategie für Fahrzeuge vor, um die Entkopplung und Drehmomentverteilung mit dem Ziel einer verbesserten Energie-, Geräusch- und/oder Lebensdauerprognose zu steuern. Dieses Verfahren kann sowohl für manuelles Fahren, mit einem menschlichen Fahrer, als auch für automatisiertes/unterstütztes Fahren mit ADAS-Systemen angewendet werden. Es kann sowohl für 2-Rad-Antriebssysteme mit Abkopplungsfunktion als auch für 4-Rad-Antriebssysteme mit und ohne Abkopplungsfunktion verwendet werden. Die Grundstruktur des Verfahrens ist in der Fig.1 dargestellt.

Im folgenden Abschnitt werden die Hauptkomponenten des vorgeschlagenen Verfahrens und ihre Wechselwirkungen beschrieben.

Das Planungs- oder Vorhersagemodul 2:
Dieses Modul nimmt eine Reihe von Kontextinformationen C auf, die vielfältige Signale enthalten können, wie z.B.:
Informationen über die bevorstehende Straße, zum Beispiel Krümmung, Steigung, Infrastruktur, gesetzliche Grenzen wie Geschwindigkeitslimits, Verkehrszeichen, usw.,
Informationen über die geplante makroskopische Route, insbesondere von einem Navigationssystem,
Informationen über die Umgebung wie Wetter, Temperatur, Straßenzustand, usw.

In einigen Ausführungsformen umfassen die Kontextinformationen C außerdem Verkehrs- und Umgebungsinformationen, die von möglicherweise vorhandenen ADAS-Sensoren wie Kameras, Radar usw. erfasst werden.

Ein beispielhafter Satz von Kontextinformation C könnte zum Beispiel sein: $C = \left\{v, a_x, a_y, c, sl, v_lim,μ, θ,…\right\}$

Die Kontextinformation C kann somit umfassen: die Fahrzeuggeschwindigkeit v, die Längs- und Querbeschleunigungen des Fahrzeugs a_x, a_y, die Straßenkrümmung c, die Straßensteigung sl, die gesetzliche Geschwindigkeitsgrenze v_lim, die Straßenreibung µ, die Straßenquerneigung θ, und optional weitere Informationen.

Ausgehend von diesen Kontextinformationen und je nach Fahrmodus berechnet das Modul bevorzugt Folgendes:
In einem manuellen Fahrmodus wird ein Prognosemodul verwendet: eine Vorhersage der wahrscheinlichsten kommenden Geschwindigkeitsentscheidungen v des menschlichen Fahrers wird für die kurz- und mittelfristige Zukunft unter Berücksichtigung des erlernten oder identifizierten Fahrertyps und der Fahrerpräferenzen geschätzt.

Im automatisierten Fahrmodus kommt ein Planungsmodul zum Einsatz: Es wird eine ganzheitliche Planung der Fahrzeuggeschwindigkeit v für die kurz- und mittelfristige Zukunft berechnet. Diese Planung kann verschiedene Ziele berücksichtigen, wie zum Beispiel den Energiebedarf, die Fahrzeit oder eine Kombination davon, bevorzugt unter Berücksichtigung von Sicherheits- und Komfortvorgaben des menschlichen Fahrers, wie zum Beispiel maximaler Querbeschleunigung. In einigen Ausführungsformen kann dies durch numerische Optimierungsverfahren realisiert werden.

Die Planung oder Vorhersage liefert bevorzugt einen Geschwindigkeitsvektor v, kann aber auch davon abgeleitete Signale wie Beschleunigung a, Krümmung c, Straßensteigung sl, Straßenreibung µ und Drehmoment t unter Verwendung von Straßen- und Kontextinformationen C bestimmen.

Im Fall des "Automatisierten Fahrens" kann eine hochgenaue Vorhersage der zukünftigen Fahrzeugbewegung erstellt werden, da der Plan für die Fahrzeugsteuerung im automatisierten Fahrmodus verwendet wird, bevorzugt von einer ADAS Steuerung als Fahrzeugsteuerungsmodul 4. Im Fall des "Manuellen Fahrens" hängt die Qualität der Vorhersage vom Verhalten des Fahrers ab. Das Verhalten der verschiedenen Fahrer kann jedoch auf der Grundlage historischer Daten, die bevorzugt für jeden Fahrer des Fahrzeugs gesammelt wurden, geschätzt werden, was zu einer besseren Vorhersagequalität führen kann.

Das Fahrzeugsteuerungsmodul 4, somit ein Modul Fahrer/ADAS-Steuerung:
Im "Automatisierten Fahrmodus" wird das Ergebnis des Planungsmoduls 2 in einem zugrundeliegenden ADAS/AD-Controller verwendet, der sicherstellt, dass das Fahrzeug der geplanten Bewegung in einem automatisierten Modus unter Berücksichtigung von Kontextinformationen C, wie dem Verkehr, folgt. Auf diese Weise wird die geplante Bewegung, die vom menschlichen Fahrer vollständig personalisiert und angepasst wird, im realen ADAS/AD-Antrieb realisiert. Beschleunigungs-, Brems- und/oder Lenkungsbefehle A können von der ADAS/AD-Steuerung vorgegeben werden.

Im "Manuellen Fahrmodus" hat der menschliche Fahrer die volle Autorität über das Fahrzeug und bestimmt die Steuereingänge Beschleunigungs-, Brems- und/oder Lenkungsbefehle 6. Das Verhalten des menschlichen Fahrers kann vorzugsweise durch fortschrittliche Lernalgorithmen angenähert und somit vorhergesagt werden.

Steuerung des Antriebsstranges 3: In beiden Situationen, die durch die Planung im ADAS-Modus oder die Vorhersage im manuellen Modus gegeben sind, verfügt das System über eine gute Vorhersage über bevorstehende Fahrsituationen und Beschleunigungs-, Verzögerungs- und Lenkanforderungen A in der nahen Zukunft, die in der Steuerung des Antriebsstranges durch Strategiemodul 3 zur Bestimmung der Abkopplungs- und Drehmomentverteilungsstrategie D, T verwendet wird. Eine detaillierte Darstellung von Strategiemodul 3 ist in Fig. 2 angegeben. Die zukünftigen Drehmomentanforderungen sind in der vorgeschlagenen Lösung verfügbar und werden in der Abkopplungs- und Drehmomentverteilungsstrategie D, T als zusätzlicher Input verwendet. Ein Prognosemodell Traktionsfähigkeitsprediktor 9 innerhalb dieses Moduls berechnet bevorzugt Sicherheitsgrenzen für den gegebenen Prognosehorizont (beispielsweise mehrere Sekunden in der Zukunft) in Form von maximalen und minimalen Drehmomenten t für jedes Rad/jede angetriebene Achse. Die Sicherheitsgrenzen für jedes Rad werden aus den Kontextinformationen C mithilfe eines mathematischen Modells ermittelt. Damit werden in erster Instanz die Radaufstandskräfte für den Prognosehorizont errechnet. Die Gleichungen für die Radaufstandskräfte können folgendermaßen aussehen: $\left[\begin{matrix}{F}_{NFL} \\ {F}_{NFR} \\ {F}_{NRL} \\ {F}_{NRR}\end{matrix}\right] = m ⋅ \left[\frac{g}{2 wb}\left(\begin{matrix}b \\ b \\ a \\ a\end{matrix}\right)+{a}_{Lat}\frac{{h}_{COG}}{t}\left(\begin{matrix}- {c}_{F} \\ {c}_{F} \\ {c}_{F} - 1 \\ 1 - {c}_{F}\end{matrix}\right)+{a}_{Long}\frac{{h}_{COG}}{2 wb}\left(\begin{matrix}- 1 \\ - 1 \\ 1 \\ 1\end{matrix}\right)\right] ,$ wobei
b .. die Distanz zwischen Schwerpunkt und Hinterachse
a .. die Distanz zwischen Schwerpunkt und Vorderachse wb .. den Radstand
m .. die Fahrzeugmasse
g .. die Erbeschleunigung
a_{Lat} .. die prognostizierte Querbeschleunigung
a_{Long} .. die prognostizierte Längsbeschleunigung
h_{COG} .. die Schwerpunkthöhe
t .. die Spurweite
und c_{F} .. die Rollmomentverteilung zwischen Vorder- und Hinterachse
bezeichnet. Zusätzlich zu den angeführten Termen, können auch noch aerodynamische Effekte, transiente Effekte durch Ein- und Ausfedern und Radlastverlagerungen, die aufgrund von geneigten oder steigenden Straßen herbeigeführt werden, berücksichtigt werden. Die Radaufstandskräfte werden mit der Kontextinformation µ zu einem Kraftschlusspotenzial weiterverarbeitet und bilden den sogenannten Kamm'schen Kreis. Von diesem Kraftschlusspotential werden prognostizierte Querkräfte, die sich aus Fahrzeugmasse und prognostizierter Querbeschleunigung, sowie den prognostizierten Aufstandskräften berechnen, subtrahiert $\left[\begin{matrix}{F}_{yFL} \\ {F}_{yFR} \\ {F}_{yRL} \\ {F}_{yRR}\end{matrix}\right] = \frac{{a}_{Lat}}{g} \left[\begin{matrix}{F}_{NFL} \\ {F}_{NFR} \\ {F}_{NRL} \\ {F}_{NRR}\end{matrix}\right]$ und resultieren in den maximal übertragbaren Radkräften in Längsrichtung als Resultat des Traktionsfähigkeitsprediktor 9. $\left[\begin{matrix}{F}_{xFLmax} \\ {F}_{xFRmax} \\ {F}_{xRLmax} \\ {F}_{xRRmax}\end{matrix}\right] = \pm \sqrt{{μ}^{2} - {\left(\frac{{a}_{Lat}}{g}\right)}^{2}} \left[\begin{matrix}{F}_{NFL} \\ {F}_{NFR} \\ {F}_{NRL} \\ {F}_{NRR}\end{matrix}\right]$

Mithilfe der Abrollradien der einzelnen Reifen können daraus Sicherheitsgrenzen je Rad ermittelt werden. Mithilfe von mathematischen Zusammenhängen, die die jeweilige Antriebsarchitektur berücksichtigen, werden daraus Sicherheitsgrenzen je angetriebener Achse bestimmt.

Die hier abgebildete Gleichung für Querkräfte kann auch um nicht stationäre Terme erweitert werden. Bei nichtstationären Kurvenfahrten können die Querkräfte beispielsweise nicht analog zu den Aufstandskräften auf die vier Räder verteilt werden. Aus diesen Änderungen kann sich auch die die Gleichung für die maximal übertragbaren Längskräfte erheblich ändern. Ein Optimierungsalgorithmus 12 variiert das Drehmoment t innerhalb dieser Grenzen, um eine bestimmte Zielfunktion wie Energieverbrauch, Geräuschemission oder Komponentenverschleiß, oder eine Kombination davon, zu optimieren.

Der Fahrkraftprädiktor 8 ist zuständig für die Prädiktion der sich in naher Zukunft einstellenden Fahrzustände, zum Beispiel der zukünftigen Reifenkräfte. Hierzu werden ähnliche Modelle und Annahmen verwendet wie im Traktionsfähigkeitsprädiktor 9 und es sind je nach Anwendungsfall verschiedene Modellkomplexitäten sinnvoll und anwendbar. Der Fahrkraftprädiktor 8 verwendet den Kontext C, die Fahrzustände F und die geplanten zukünftigen Beschleunigungen A als Eingang. Zusammen mit dem Resultat des Traktionsfähigkeitsprädiktor 9 wird das Ergebnis des Fahrkraftprädiktor 8 dem Kupplungsberechtigungsprüfer 10 übergeben, welche eine grundsätzliche Entscheidung, über den gegebenen zukünftigen zeitlichen Prädiktionshorizont, angibt ob und wann ein Auskuppeln aus Traktionssicht zulässig ist. Dieses Ergebnis des Kupplungsberechtigungsprüfer 10 ist ein Eingang in den Optimierungsalgorithmus 12 wodurch sichergestellt ist, dass die Traktionsanforderungen immer eingehalten werden. In Bereichen in denen beide Zustände das erforderliche Drehmoment liefern könnten, hat der Optimierungsalgorithmus 12 den Freiheitsgrad selbst zu entscheiden, was optimal im Sinne der Metriken (Energie, Verluste, Geräusch, Verschleiß,...) gegeben durch Prädiktor 11 und über den zeitlichen Prädiktionshorizont ist.

Die vorgeschlagene Lösung umfasst somit die Planung/Prognose zukünftiger Fahrzustände F, wie Drehmomente t und/oder Beschleunigungen a, und optimiert die Drehmomentverteilung T und das Ein-/Auskuppeln D, also eine Kupplungsentscheidung zum An-/Abkoppeln einer Sekundärachse bzw. eines Antriebsaggregats über einen zeitlichen Prognosehorizont bevorzugt unter Berücksichtigung von Ein-/Auskuppelverlusten (Kupplungsverlusten), Wirkungsgraden und weiteren Zielgrößen wie Energie-, Verschleiß- und NVH-Minimierung, zum Beispiel durch zusätzliche Strafterme für hohe Drehmomente oder Strafterme für ungünstige Drehmomentverteilungen T in Bezug auf Verschleiß, Schwingungen oder Geräuschentwicklung. Zu diesem Zweck berechnet der Prädiktor für Energie, Verluste, Geräusch und Verschleiß 11 die entsprechenden Metriken und Größen, sodass diese im Optimierungsalgorithmus 12 berücksichtigt werden können. Dies wird durch eine modell- und datenbasierte Abstraktion der Effekte ermöglicht, um diese systematisch in das Optimierungsproblem zu integrieren, um das maximal zulässige Drehmoment t pro Achse nicht zu überschreiten und ggf. ungünstige Lastpunkte (ungünstig für Gesamtenergieverbrauch, Verschleiß oder NVH) durch optimale Lastpunktverschiebung (zum Beispiel durch Zuschalten der 2. Achse) zu vermeiden. Dies geschieht, wie oben beschrieben, nicht nur auf Basis des aktuellen Fahrzustandes und der Fahrsituation, sondern auch unter Berücksichtigung zukünftiger Fahrzustände F, die durch Vorhersage im manuellen Fahrbetrieb oder Planung im automatisierten Fahrbetrieb (ADAS) gegeben sind. Insbesondere für die Ein- und Auskuppelentscheidung (Kupplungsentscheidung) D, die eine binäre Entscheidung zu einem bestimmten Zeitpunkt darstellt, ist es sehr vorteilhaft, unter Berücksichtigung zukünftiger Drehmomentanforderungen t vorausschauend zu entscheiden, um eine energieoptimierte Entscheidung zu treffen und unnötige Kupplungsvorgänge zu vermeiden.

Wir schlagen somit eine Strategie zur Abkoppelung eines Antriebsstrangs D und zur Verteilung eines Drehmoments T vor, um beispielsweise den Energieverbrauch, die Geräuschemissionen und den Verschleiß der Komponenten zu reduzieren. Dabei werden nicht nur vergangene, sondern auch zukünftige Fahrzeug-, Verkehrs- und Umweltzustände berücksichtigt, die von einem Planungsmodul 2 beim automatisierten Fahren oder einem Vorhersagemodul 2 beim manuellen Fahren bereitgestellt werden.

Das Verfahren kann umfassen: Eine ganzheitliche und damit optimale Steuerungsstrategie der Drehmomentverteilung T und Abschaltstrategie D hinsichtlich Energieverbrauch, Geräuschemission und Komponentenverschleiß. Die Nutzung von Informationen über zukünftige Fahrzeug-, Verkehrs- und Umweltzustände führt zu einer vorausschauenden Drehmomentverteilung T und Abschaltstrategie D.

Sowohl der automatisierte als auch der manuelle Fahrmodus eines Kraftfahrzeuges kann optimiert werden. Die Planung im automatisierten Modus kann eine numerische Optimierung enthalten, aber auch heuristische oder erlernte Planung, zum Beispiel durch maschinelles Lernen, kann eingesetzt werden. Die Antriebsstrang-Steuerungsstrategie, also das Strategiemodul 3, kann eine numerische Optimierung enthalten, kann aber auch heuristische oder erlernte Strategien, wie zum Beispiel maschinelles Lernen zur Optimierung einsetzen.

### Bezugszeichnliste

- 1: Kraftfahrzeug
- 2: Planungs- oder Vorhersagemodul
- 3: Strategiemodul
- 4: Fahrzeugsteuerungsmodul
- 5: Trenneinheit und/oder Drehmomentverteilungseinheit
- 7: Antriebsstrang
- 8: Fahrkraftprädiktor
- 9: Traktionsfähigkeitsprädiktor
- 10: Kupplungsberechtigungsprüfer
- 11: Prädiktor für Energie, Verluste, Geräusch und Verschleiß
- 12: Optimierungsalgorithmus über zeitlichen Prädiktionshorizont

- A: Beschleunigungs-, Brems- und/oder Lenkungsbefehle
- C: Kontextinformation
- D: Ein- und Auskoppelung (Disconnect)
- F: Fahrzustände
- I: Geschwindigkeits- und Kontextinformation
- T: Drehmomentverteilung (Torque)
- a: Beschleunigung
- a_x: Längsbeschleunigung
- a_y: Querbeschleunigung
- c: Straßenkrümmung
- sl v_lim: Straßensteigung
- t: Drehmoment
- v: Geschwindigkeit gesetzliche Geschwindigkeitsgrenze
- θ µ: Straßenquerneigung Straßenreibung

## Patentansprüche

1. Verfahren zum Steuern einer Drehmomentverteilung (T) und/oder einer Ein- und Auskoppelung (D) einer Antriebsverbindung in einem Kraftfahrzeug (1),
**dadurch gekennzeichnet , dass** das Verfahren ein Planungs- oder Vorhersagemodul (2) verwendet, um aus einer vorgegebenen Kontextinformation (C) zukünftige Fahrzustände (F), bevorzugt zukünftige Geschwindigkeiten (v) und/oder Beschleunigungen (a) und/oder Drehmomente (t) des Kraftfahrzeuges, zu bestimmen, wobei das Verfahren ein Drehmomentverteilungs-Strategiemodul und/oder ein Ein- und Auskoppelungs-Strategiemodul als Strategiemodul (3) verwendet, um abhängig von dem Ergebnis eines Optimierungsalgorithmus (12) des Strategiemoduls (3), der die geplanten oder vorhergesagten zukünftigen Fahrzustände (F) aus dem Planungs- oder Vorhersagemodul (2) als Eingabeparameter verwendet um eine optimale Drehmomentverteilung (T) und/oder eine optimale Ein- und Auskoppelung (D) der Antriebsverbindung in dem Kraftfahrzeug (1) über einen zeitlichen Prädiktionshorizont zu bestimmen, die Drehmomentverteilung (T) und/oder die Ein- und Auskoppelung (D) der Antriebsverbindung in dem Kraftfahrzeug (1) zu steuern.

2. Verfahren nach Anspruch 1,
**dadurch gekennzeichnet , dass** der Optimierungsalgorithmus (12) des Strategiemoduls (3) zukünftige geplante oder vorhergesagte Drehmomente in der Optimierung berücksichtig, die aus den geplanten oder vorhergesagten zukünftigen Fahrzuständen (F) aus dem Planungs- oder Vorhersagemodul stammen oder abgeleitet durch einen Fahrkraftprädiktor (8) sind.

3. Verfahren nach zumindest einem der vorhergehenden Ansprüche, **dadurch gekennzeichnet , dass** das Strategiemodul (3) mittels eines Traktionsfähigkeitsprädiktors (9) ein maximales Drehmoment und/oder ein minimales Drehmoment als Sicherheitsgrenze für zukünftige Drehmomentanforderungen bestimmt und der Optimierungsalgorithmus (12) des Strategiemoduls (3) diese Sicherheitsgrenze bei der Bestimmung der optimalen Drehmomentverteilung (T) und/oder der optimalen Ein- und Auskoppelung (D) der Antriebsverbindung in dem Kraftfahrzeug (1) über den zeitlichen Prädiktionshorizont einhält.

4. Verfahren nach zumindest einem der vorhergehenden Ansprüche, **dadurch gekennzeichnet , dass** der Optimierungsalgorithmus des Strategiemoduls (3) die Drehmomentverteilung (T) und/oder die Ein- und Auskoppelung (D) der Antriebsverbindung in dem Kraftfahrzeug (1) auf Ziele wie Energieverbrauch und/oder Geräuschentwicklung und/oder Vibrationen und/oder Komponentenverschleiß optimiert und zu diesem Zweck, diese Größen im Prädiktor (11) für den zeitlichen Prädiktionshorizont berechnet und dem Optimierungsalgorithmus (12) übergibt.

5. Verfahren nach zumindest einem der vorhergehenden Ansprüche, **dadurch gekennzeichnet , dass** der Optimierungsalgorithmus (12) des Strategiemoduls (3) zur Optimierung der Drehmomentverteilung (T) und/oder der Ein- und Auskoppelung (D) der Antriebsverbindung in dem Kraftfahrzeug Straftherme verwendet für hohe Drehmomente und/oder Straftherme für ungünstige Drehmomentverteilungen hinsichtlich Energieverbrauch und/oder Geräuschentwicklung und/oder Vibrationen und/oder Komponentenverschleiß.

6. Verfahren nach zumindest einem der vorhergehenden Ansprüche, **dadurch gekennzeichnet , dass** das Planungs- oder Vorhersagemodul (2) eine Vorhersage der wahrscheinlichsten Fahrzustände (F), insbesondere Geschwindigkeit (v) und/oder Beschleunigung (a), die ein Fahrer des Kraftfahrzeugs (1) in der kurzfristigen und mittelfristigen Zukunft wählen wird durch Schätzalgorithmen und/oder Schätzkonzepte bestimmt oder dass das Planungs- oder Vorhersagemodul (2) eine Planung der Fahrzustände (F), insbesondere der Geschwindigkeit (v) und/oder Beschleunigung (a), die ein Fahrzeugsteuerungsmodul (4), insbesondere ein ADAS Modul, des Kraftfahrzeugs (1) in der kurzfristigen und mittelfristigen Zukunft umsetzen wird, durch eine numerische Optimierung bestimmt.

7. Verfahren nach zumindest einem der vorhergehenden Ansprüche, **dadurch gekennzeichnet , dass** das Planungs- oder Vorhersagemodul (2) als Kontextinformation (C) Informationen über die vorausliegende Straße, wie beispielsweise Kurven, Steigungen, Geschwindigkeitsbegrenzungen, Verkehrsschilder, und/oder Informationen über die vorausliegende Route, beispielsweise aus einem Navigationssystem, und/oder Informationen über aktuelle und/oder zukünftige Umweltbedingungen, wie beispielsweise Wetter, Temperatur, Feuchtigkeit, Straßenzustand, verwendet, um zukünftige Fahrzustände (F) des Kraftfahrzeuges (1) zu bestimmen.

8. Verfahren nach zumindest einem der vorhergehenden Ansprüche, **dadurch gekennzeichnet , dass** das Verfahren ein Fahrzeugsteuerungsmodul (4) verwendet, um in Übereinstimmung mit den geplanten oder vorhergesagten zukünftigen Fahrzustände (F) aus dem Planungs- oder Vorhersagemodul (2) das Kraftfahrzeug (1) zu steuern, wobei bevorzugt Ausgangsdaten des Fahrzeugsteuerungsmoduls (4) als Eingangsdaten für das Strategiemodul (3) verwendet werden.
